# EUROPEAN PATENT APPLICATION

(11) **EP 3 711 875 A1**
(43) Date of publication of application: **23.09.2020**
(21) Application number: 18877336.0
(22) Date of filing: 20.08.2018
(51) Int. Cl.: B21D 51/26, B21D 51/38

(54) **BOTTLE-SHAPED CAN MANUFACTURING DEVICE AND BOTTLE-SHAPED CAN MANUFACTURING METHOD**

(30) Priority: 14.11.2017 JP 2017219129
(71) Applicant: Toyo Seikan Co., Ltd., Tokyo 141-8640 (JP)
(72) Inventor: ENDO, Tadashi, Yokohama-shi Kanagawa 230-0001 (JP); TAMURA, Masaomi, Yokohama-shi Kanagawa 230-0001 (JP); SHIMIZU, Yusaku, Yokohama-shi Kanagawa 230-0001 (JP)
(74) Representative: Haseltine Lake Kempner LLP
(86) International application number: PCT/JP2018/030650
(87) International publication number: WO 2019/097789

(57) **Abstract**

In order to manufacture a bottle-shaped can while eliminating the need for cleaning/drying after a mouth section formation step, a bottle-shaped can manufacturing device comprises: a necking processing unit for carrying out a necking process while rotating a can body having a bottomed cylindrical shape around a rotational axis during formation of a mouth section in the can body; and a trimming processing unit for subjecting the upper end portion of the can body to slit processing and carrying out trimming while rotating the can body while moving the can body around the rotational axis. A plurality of necking processing units are arranged in sequence, and the trimming processing unit is arranged in sequence with at least one of the necking processing units.

## Description

### [Technical Field]

The present invention relates to a bottle can manufacturing apparatus and a bottle can manufacturing method.

### [Background Art]

A bottle can in which beverages or the like is to be filled is a can container having a bottle shape in which a mouth portion has a reduced diameter, and one with a re-pluggable screw type cap-attached container is generally used.

For example, in the case of an aluminum can, in a bottle can manufacturing process, an aluminum plate is punched out and subjected to shallow squeezing to form a base cup, the formed cup is squeezed and drawn to form a can barrel, the can barrel is trimmed to align a height of an upper part thereof, processes such as cleaning, printing, and inner coating are performed as necessary, and then a mouth portion formation step is performed. In the mouth portion formation step, necking, trimming, formation of a screw part, formation of a curled part, etc., are performed, and also in this case, trimming for adjusting a top height of the mouth portion is performed before the screw part and the curled part are formed.

In the trimming performed in the mouth portion formation step, adjustment of a can height is performed by cutting an upper end part thereof. A trimming apparatus used in this step is, for example, an apparatus or the like which includes a cutting tool for cutting an opening edge of the can body, a guide part disposed inside an opening part of the can body, and a suction duct for sucking shavings generated by cutting with the cutting tool (for example, see PTL 1).

### [Citation List]

### [Patent Literature]

[PTL 1] Japanese Patent Application Publication No. 2005-40803

### [Summary of Invention]

### [Technical Problem]

According to the conventional apparatus mentioned above, since shavings are generated by trimming in the mouth portion formation step, it is difficult to completely remove fine shavings even when the trimming apparatus having the suction duct is used as in the conventional technique mentioned above, and thus it is inevitable to clean and dry the can body after the mouth portion formation step.

Cleaning and drying of the can body performed after the mouth portion formation step greatly affects productivity of the bottle can since processing time therefor is added. For this reason, in order to obtain high productivity, trimming (adjustment of the can height) that does not generate shavings in the mouth portion formation step is required so that cleaning and drying become unnecessary.

The present invention has an object to cope with such situations. That is, an object of the present invention is to provide a bottle can manufacturing apparatus in which no fine shavings are generated in a mouth portion formation step and cleaning and drying after the mouth portion formation step are not unnecessary.

### [Solution to Problem]

In order to solve such problems, the present invention has the following configurations.

A bottle can manufacturing apparatus for forming a mouth portion in a bottomed cylindrical can body includes necking processing parts each of which performs necking processing while moving the can body around a rotation axis, and trimming processing parts each of which performs slit processing on an upper end part of the can body to perform trimming while moving the can body around the rotation axis and rotating the can body, and wherein a plurality of the necking processing parts are continuously disposed, and the trimming processing parts are continuously disposed for at least one of the necking processing parts.

A bottle can manufacturing method for forming a mouth portion in a bottomed cylindrical can body includes: performing a plurality of stages of necking processing in sequence in which each stage of the necking processing is performed while moving the can body around a rotation axis, and performing slit processing on an upper end part of the can body to perform trimming in sequence with at least one stage of the necking processing while moving the can body around the rotation axis and rotating the can body.

### [Advantageous Effects of Invention]

According to the present invention having such features, since there can be performed manufacturing of a bottle can in which no fine shavings are generated in a mouth portion formation step and cleaning and drying after the mouth portion formation step are unnecessary, productivity of the bottle can be significantly improved.

### [Brief Description of Drawings]

[Fig. 1] Fig. 1 is an explanatory diagram showing a bottle can manufacturing apparatus according to an embodiment of the present invention.
[Fig. 2] Fig. 2 is an explanatory diagram showing a rotating turret of a necking processing part.
[Fig. 3] Fig. 3 is an explanatory diagram showing an operation of a necking tool of the necking processing part, (a) shows a state immediately after a can body is supplied to the rotating turret, (b) shows a state in which the rotating turret is rotated thereafter, and (c) shows a state in which an upper end part of the can body is inserted between an inner tool and an outer tool thereafter.
[Fig. 4] Fig. 4 is an explanatory diagram showing a trimming processing part.
[Fig. 5] Fig. 5 is an explanatory diagram showing a trimming tool of the trimming processing part.
[Fig. 6] Fig. 6 is a cross-sectional view taken along line A-A of Fig. 5, (a) shows a state in which a gap is formed between the inner tool and the outer tool, and (b) shows a state in which slit processing is performed by the inner tool and the outer tool.

### [Description of Embodiments]

Hereinafter, embodiments of the present invention will be described with reference to the figures. In the following description, the same reference numeral in different figures indicates a part having the same function, and repeated descriptions of each figure will be omitted as appropriate.

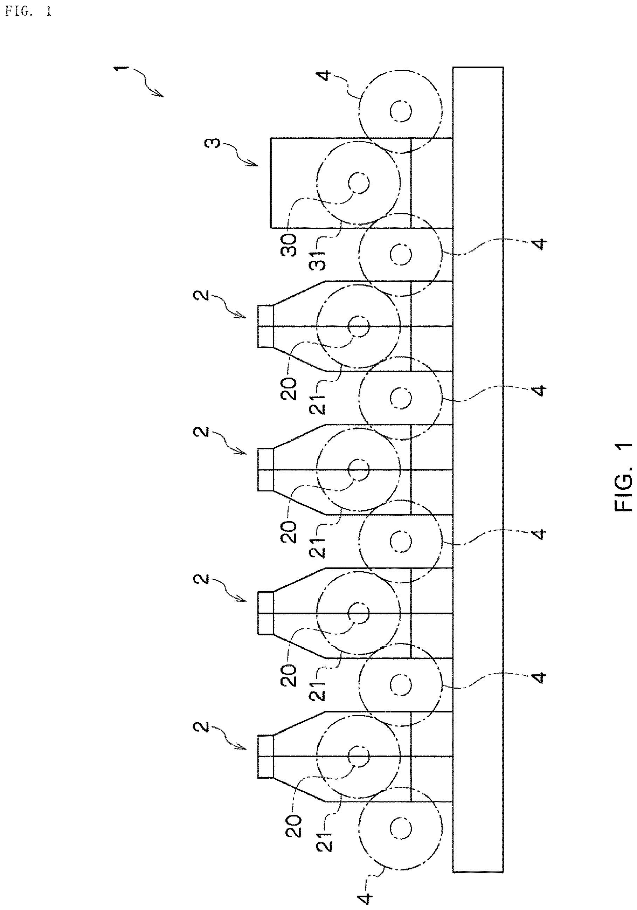

As shown in Fig. 1, a bottle can manufacturing apparatus 1 is for forming a mouth portion in a bottomed cylindrical can body and includes a plurality of necking processing parts 2 and a trimming processing part 3. Each necking processing part 2 includes a rotating turret 21 that performs necking processing while moving the can body around a rotation axis 20 thereof, and the trimming processing part 3 includes a rotating turret 31 that performs trimming processing while moving the can body around the rotation axis 30 and rotating the can body.

In the necking processing parts 2, one stage of necking processing is performed by one necking processing part 2. The plurality of necking processing parts 2 are continuously disposed via a coupling turret 4, and the can body supplied to one rotating turret 21 via the coupling turret 4 undergoes one stage of necking processing while moving around the rotation axis 20 by a predetermined angle (for example, 120°), and is subjected to multi-stage necking processing by being processed in sequence by the plurality of necking processing parts 2.

The trimming processing part 3 is continuously disposed with one of the necking processing parts 2, and eliminates an upper end part of the can body by a predetermined height by slit processing in order to perform slit processing of the upper end part of the can body using the one trimming processing part 3 to adjust a height of the can body to a predetermined height. The can body transferred from one necking processing part 2 to the coupling turret 4 is supplied to the rotating turret 31 of the trimming processing part 3 via the coupling turret 4. The can body supplied to the rotating turret 31 is subjected to slit processing of the upper end part while rotating when it moves around the rotation axis 30 by a predetermined angle (for example, 120°).

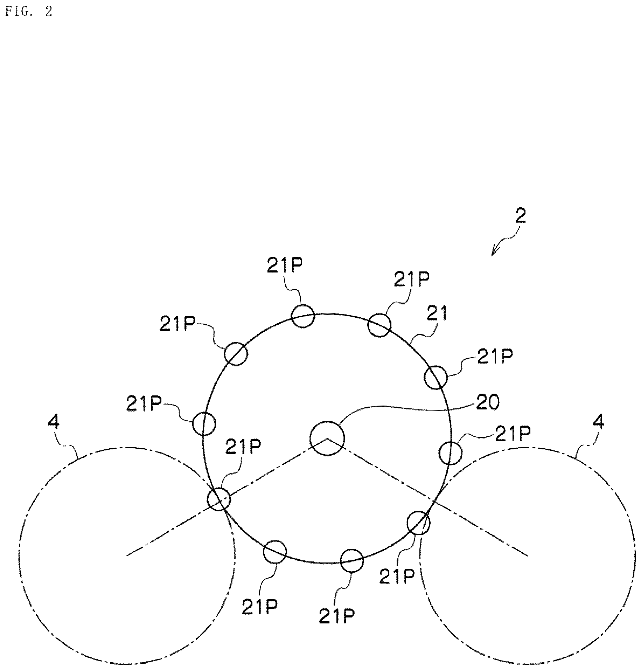

As shown in Fig. 2, the rotating turret 21 of each of the necking processing parts 2 includes a plurality of can body holding parts 21P around the rotation axis 20. In the illustrated example, ten can body holding parts 21P are provided around the rotation axis 20 at every angle of 36°. One can body is held in each of the can body holding parts 21P, and when the rotating turret 21 makes one rotation, one stage of necking processing is performed for the can bodies corresponding to the number (ten in the illustrated example) of can body holding parts 21P. The can bodies held by the can body holding parts 21P move around the rotation axis 20 with the rotation of the rotating turret 21.

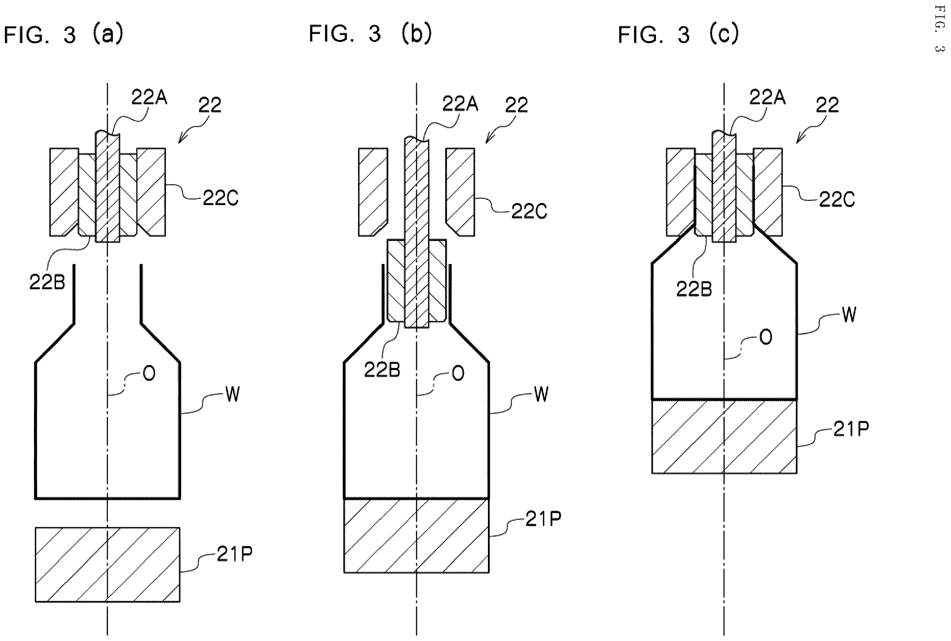

As shown in Fig. 3, necking processing is performed for the can body W held by each can body holding part 21P using a necking tool 22. One necking tool 22 corresponds to one can body holding part 21P, and the necking tool 22 moves in synchronization with the rotation of the rotating turret 21.

In the necking tool 22, an inner tool 22B and an outer tool 22C are arranged around a center shaft 22A arranged coaxially with a can axis O. The outer tool 22C has an annular shape, and an inner diameter thereof is smaller by about 1 to 2 mm than an outside diameter of an opening part of the can body W. The inner tool 22B has an outside diameter which is smaller by about 1 to 2 mm than an inner diameter of the opening part of the can body W and is disposed inside the can body W. In addition, by inserting the upper end part of the can body W between the inner tool 22B and the outer tool 22C, necking processing is performed on the upper end part of the can body W.

The inner tool 22B and the can body holding part 21P move forward and backward in a direction of the can axis O in synchronization with the rotation of the rotating turret 21. Immediately after the can body W is supplied from the coupling turret 4 to the rotating turret 21, the necking tool 22 and the can body holding part 21P are separated from the can body W as shown in Fig. 3(a). Thereafter, when the rotating turret 21 rotates, as shown in Fig. 3(b), the can body holding part 21P moves toward the can body W and holds a bottom part of the can body W, and the inner tool 22B moves toward the can body W and is inserted into the opening part of the can body W. Thereafter, the inner tool 22B, the can body W, and the can body holding part 21P integrally move toward the outer tool 22C, and as shown in Fig. 3(c), the upper end part of the can body W is inserted between the inner tool 22B and the outer tool 22C, so that one stage of necking processing is performed.

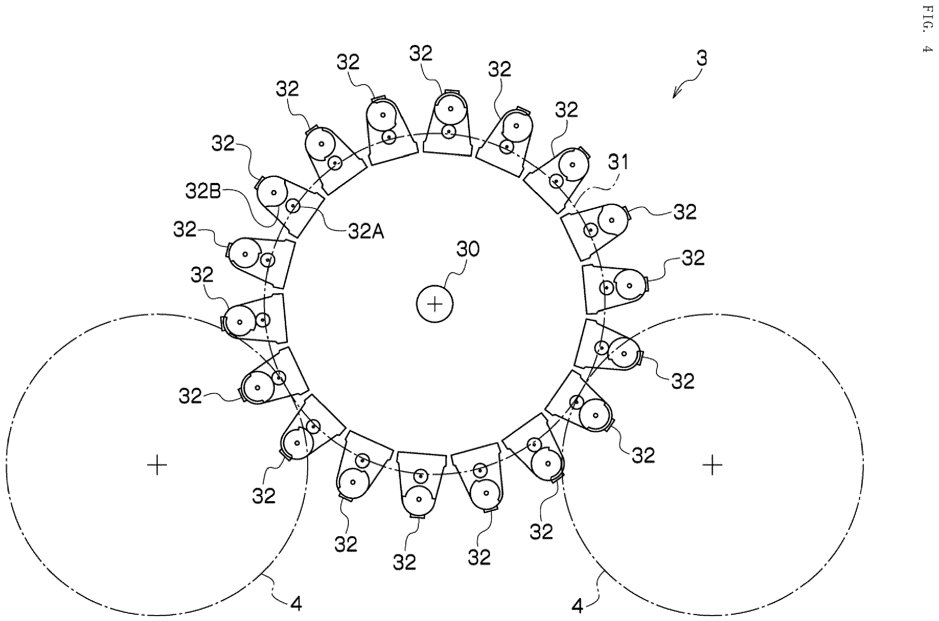

Fig. 4 shows the trimming processing part 3. In the illustrated example, 18 can body holding parts (not shown) are provided on the rotating turret 31 of the trimming processing part 3, and one trimming tool 32 is provided for each can body holding part. Each can body holding part is configured to be rotatable around the can axis, and the can body held by each can body holding part rotates with rotation of the can body holding part. Each trimming tool 32 includes an inner tool 32A and an outer tool 32B. The inner tool 32A is arranged inside the can body, the outer tool 32B is arranged outside the can body, and the upper end part of the can body W is sandwiched between a cutting part of the inner tool 32A and a cutting part of the outer tool 32B and is sheared while the can body W rotates, whereby the slit processing is performed on the upper end part of the can body.

Similar to the necking processing part 2, the trimming processing part 3 performs slit processing with the rotation of the rotating turret 31. That is, the can body held by the can body holding part of the rotating turret 31 is subjected to slit processing using the inner tool 32A and the outer tool 32B while moving around the rotation axis 30 and rotating.

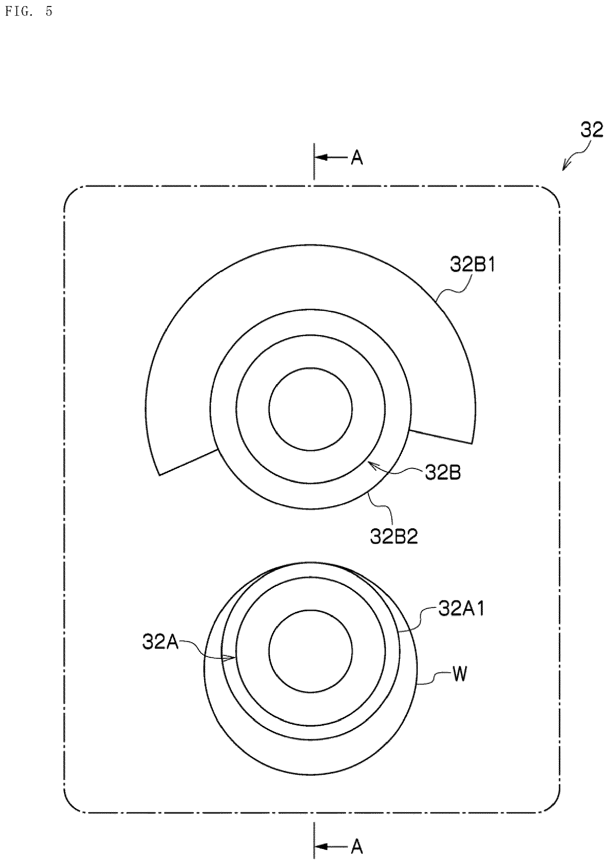

As shown in Fig. 5, the outer tool 32B of the trimming tool 32 has a cutting part 32B1 and a relief part 32B2 around a rotation axis thereof. The relief part 32B2 is provided around the rotation axis to take up a predetermined angle (for example, 160°) out of 360°, and a part taking up the remaining angle (for example, 200°) forms the cutting part 32B1. Also, the inner tool 32A of the trimming tool 32 has a cutting part 32A1 on the entire circumference around the rotation axis.

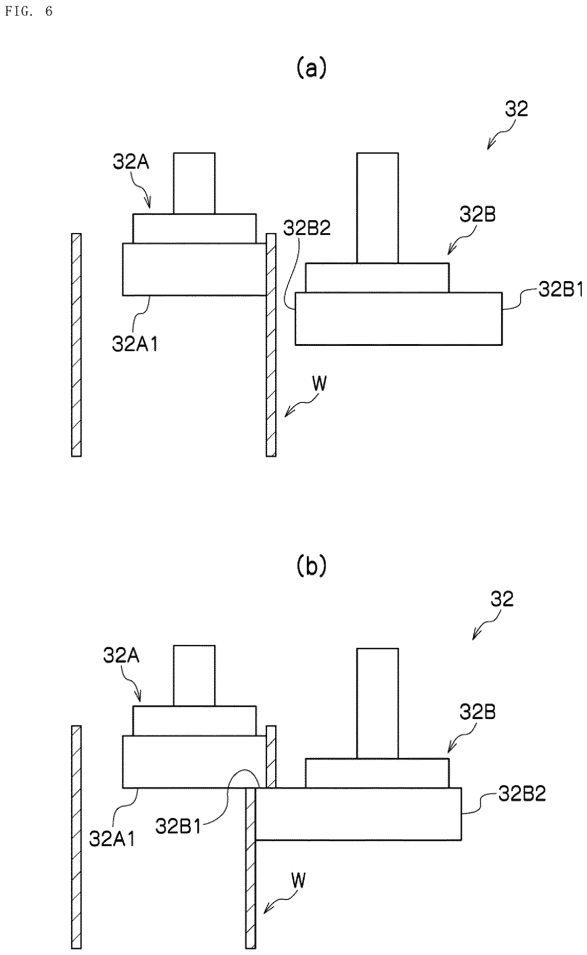

A distance between the axes of the inner tool 32A and the outer tool 32B is constant, a gap is formed between the inner tool 32A and the outer tool 32B as shown in Fig. 6(a) at the timing when the relief part 32B2 approaches the inner tool 32A, and at that timing, the upper end part of the can body W is inserted between the inner tool 32A and the outer tool 32B.

Then, as shown in Fig. 6(b), the can body W is sandwiched between the cutting part 32B1 of the outer tool 32B and the cutting part 32A1 of the inner tool 32A with the rotation of the outer tool 32B and the inner tool 32A, and the entire circumference of the can body W is sheared while the can body W rotates, whereby slit processing is performed on a periphery of the upper end part of the can body W. As a result, the upper end part of the can body W is separated from the can body into a single ring shape and recovered by a recovery apparatus (not shown).

In the bottle can manufacturing apparatus 1 shown in Fig. 1, the number of necking processing parts 2 can be appropriately set in accordance with the number of stages of the necking processing. In addition, after predetermined necking processing are performed, a first stage of trimming processing is performed by the trimming processing part 3. Thereafter, formation of a bead part or a screw part is performed on the mouth portion, and if necessary, necking processing is carried out in several stages by the necking processing parts 2. Then, after a second stage of trimming processing is carried out, formation of a curled part is performed, whereby the bottle can in which the mouth portion has been formed can be obtained.

Further, the height of the upper end part of the can body W may become uneven when a plurality of stages of necking processing is performed, and a problem may occur if the next stage of necking processing is performed in the above state. For that reason, the trimming processing part 3 may be provided in the middle of the plurality of necking processing part 2 as necessary.

As a result, according to the bottle can manufacturing apparatus 1 according to the embodiment of the present invention, a ring-shaped cut end is generated by the slit processing using the trimming processing part 2, but formation of the mouth portion can be completed without generating fine shavings. This eliminates the need for cleaning and drying after the trimming process, and can significantly improve the productivity of the bottle can.

### [Reference Signs List]

- 1: Bottle can manufacturing apparatus
- 2: Necking processing part
- 3: Trimming processing part
- 20, 30: Rotation axis
- 21, 31: Rotating turret
- 4: Coupling turret
- 21P: Can body holding part
- 22: Necking tool
- 22A: Center shaft
- 22B: Inner tool
- 22C: Outer tool
- 32: Trimming tool
- 32A: Inner tool
- 32B: Outer tool
- 32A1, 32B1: Cutting part
- 32B2: Relief part

## Claims

1. A bottle can manufacturing apparatus for forming a mouth portion in a bottomed cylindrical can body, comprising:
necking processing parts each of which performs necking processing while moving the can body around a rotation axis; and
a trimming processing part which performs slit processing on an upper end part of the can body to perform trimming while moving the can body around a rotation axis and rotating the can body,
wherein the necking processing parts are continuously disposed, and
the trimming processing part is continuously disposed at at least one of the necking processing parts.

2. The bottle can manufacturing apparatus according to claim 1, wherein the trimming processing part is continuously disposed in the middle of the necking processing parts continuously disposed.

3. The bottle can manufacturing apparatus according to claim 1 or 2, wherein the necking processing parts and the trimming processing part include a rotating turret having a plurality of can body holding parts around a rotation axis thereof.

4. A bottle can manufacturing method for forming a mouth portion in a bottomed cylindrical can body, comprising:
performing a plurality of stages of necking processing in sequence in which each stage of the necking processing is performed while moving the can body around a rotation axis; and
performing slit processing on an upper end part of the can body to perform trimming while moving the can body around a rotation axis and rotating the can body in sequence with at least one stage of the necking processing.

5. The bottle can manufacturing method according to claim 4, wherein the trimming is performed in sequence with the necking processing in the middle of the necking processing performed in sequence in the plurality of stages.

6. The bottle can manufacturing method according to claim 4 or 5, wherein formation of a screw part and a curled part is performed after the trimming.
